# NEW EUROPEAN PATENT SPECIFICATION

(11) **EP 3 355 562 B2**
(45) Date of publication and mention of the opposition decision: **17.01.2024**
(45) Mention of the grant of the patent: 07.08.2019
(21) Application number: 18153293.8
(22) Date of filing: 24.01.2018
(51) Int. Cl.: H04M 11/02, H04N 7/18

(54) **CALL FORWARDING DEVICE VIA INTERNET FOR DOOR PHONE AND VIDEO DOOR PHONE APPARATUSES**
ANRUFWEITERLEITUNGSVORRICHTUNG ÜBER INTERNET FÜR TÜRSPRECHANLAGEN UND VIDEOTÜRSPRECHANLAGEN
DISPOSITIF DE TRANSFERT D'APPELS VIA INTERNET POUR TÉLÉPHONE DE PORTE ET APPAREILS DE VISIOPHONIE

(30) Priority: 25.01.2017 IT 201700007652
(43) Date of publication of application: 01.08.2018
(73) Proprietor: Urmet S.p.A., 10154 Torino (IT)
(72) Inventor: MINARELLI, Giorgio, 10060 PRAGELATO TO (IT)
(74) Representative: Modiano, Micaela Nadia

(56) References cited:
- EP-A1- 2 506 548
- NL-B- 2 013 946
- US-A1- 2007 052 531
- US-A1- 2011 299 671
- Auszug aus GIRA Katalog 2015/2016 Intelligente Gebaude technik von GIRA. Best.-Nr-18055 10 10/15100.05, Oktober 2015; Seiten 416, 418 und 419
- Auszug aus GIRA Katalog 2014/2015; Intelligente Gebaude-technik von GIRA, Best Nr. .18053 .1.0 10/14.105.05, Oktober 2014; Seiten 430, 432 und 433

## Description

The present invention relates to a call forwarding device via internet for door phone and video door phone apparatuses.

For ease of description, in the present description reference will be made only to video door phone apparatuses, for which the device according to the invention is particularly advantageous, although the invention can effectively be applied also to door phone apparatuses, i.e. without video transmission.

As is known, a video door phone apparatus generally comprises at least one calling station provided with a video camera arranged outside a building, at least one receiving station provided with a display, sometimes simply called a "monitor", in each one of the dwellings of the building, and at least one power supply device.

The calling station and the receiving station are interconnected by way of a communication line, for example a double-wire line or a BUS in more recent partially/completely digital systems, for the transmission of data in digital format and of the audio and video signal in analog or digital format, as well as for power supply.

As is known, some latest-generation video door phone systems implement the function to forward the call to external devices (e.g., smartphones, tablet computers etc.) over the internet using VOIP (Voice Over Internet Protocol).

In particular, video door phone kits are known in which the function to forward the call is integrated in the monitor.

NL 2 013 946 B describes a door entry system with an enhancement module allowing connection of the door entry system to a wireless network (e.g. WLAN, BT, ZigBee). EP 2 506 548 A1 discloses a wireless adapter for a door entry system. US 2007/052531 A1 describes a wireless adapter for a video door entry system.

Furthermore, video door phone systems are known which are based on IP technology, typically for large residential complexes with high integration needs (access control, switchboards, anti-intrusion, video surveillance, intercommunication), which provide the function to forward the call, but this function is provided for all the users on the building server.

The call forwarding systems known today, such as those mentioned above, have a limited versatility in that they function only within specifically designed kits and/or video door phone systems for large residential complexes. Therefore, these cannot be associated with pre-existing systems - or at the most they are compatible only with systems of the same type - and they cannot be reused if the video door phone system is replaced.

As a consequence, in order to take advantage of such function, the user in a single-family dwelling has to replace the entire video door phone system, at high cost.

The situation is even more problematic for apartment buildings, where it is necessary to replace the entire video door phone system with another one that provides the function to forward the call, with evident complications with regard to costs and to the necessity to get all the apartment owners to agree on the operation.

Therefore, the aim of the present invention is to provide a call forwarding device via internet for door phone and video door phone apparatuses that offers greater flexibility in terms of capacity for adaptation to pre-existing systems of any type and age and, even for an apartment building, by intervening only in the dwelling of the user affected, without further constraints.

This aim and these and other objects, which will become better apparent hereinafter, are achieved by the device having the characteristics recited in the appended claim 1, while the appended dependent claims define other characteristics of the invention which are advantageous, although secondary.

Now the invention will be described in more detail, with reference to a preferred but not exclusive embodiment thereof, which is illustrated for the purposes of non-limiting example in the accompanying drawings, wherein:
Figure 1 schematically illustrates a video door phone system for a generic dwelling, in which a call forwarding device according to the invention is installed;
Figure 2 is a partially exploded perspective view of the device according to the invention;
Figure 3 is a perspective view of some assembled components of the device according to the invention;
Figure 4 is a side view of the assembled components in Figure 3;
Figure 5 is a block diagram of a circuit incorporated in the device according to the invention;
Figure 6 is a block diagram of a circuit incorporated in the device according to an alternative embodiment of the invention.

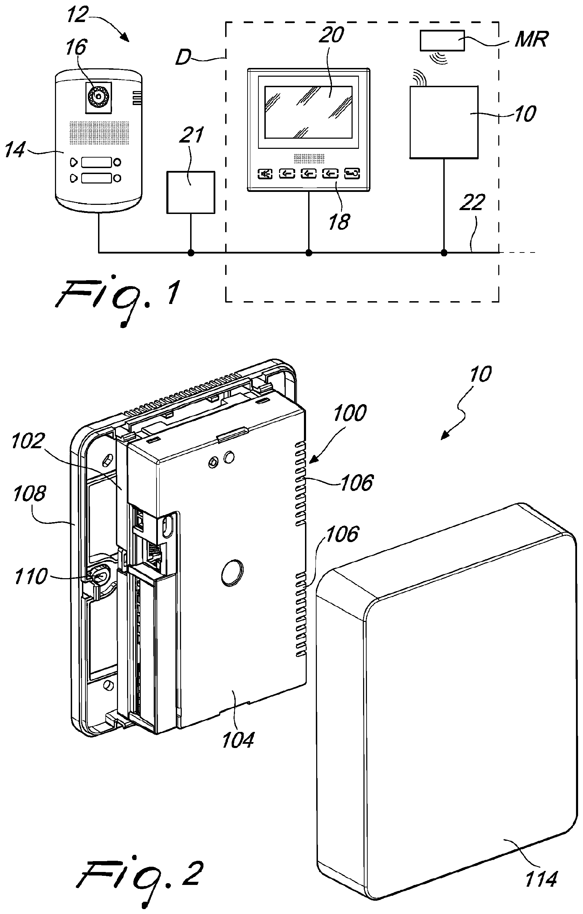

With initial reference to Figure 1, a call forwarding device 10 is adapted to be associated with a door phone system or, preferably, a video door phone system 12 of conventional type.

The video door phone system 12 is provided with a calling station 14 with a video camera 16 arranged outside a building, and at least one receiving station 18 with a display 20 which is arranged in each one of the dwellings D of the building.

In this regard, the building can be a single-dwelling house or a two-dwelling house or an apartment building.

The calling station 14 and the receiving station 18 are interconnected by a communication line that also carries the power supply 21. The video door phone system according to this embodiment makes use of a double-wire line or BUS 22, which carries the power supply, data in digital format, and audio and video signals in analog format.

The device 10 is adapted to be installed inside the dwelling D preferably in addition - but optionally also as an alternative - to the pre-existing receiving station 18.

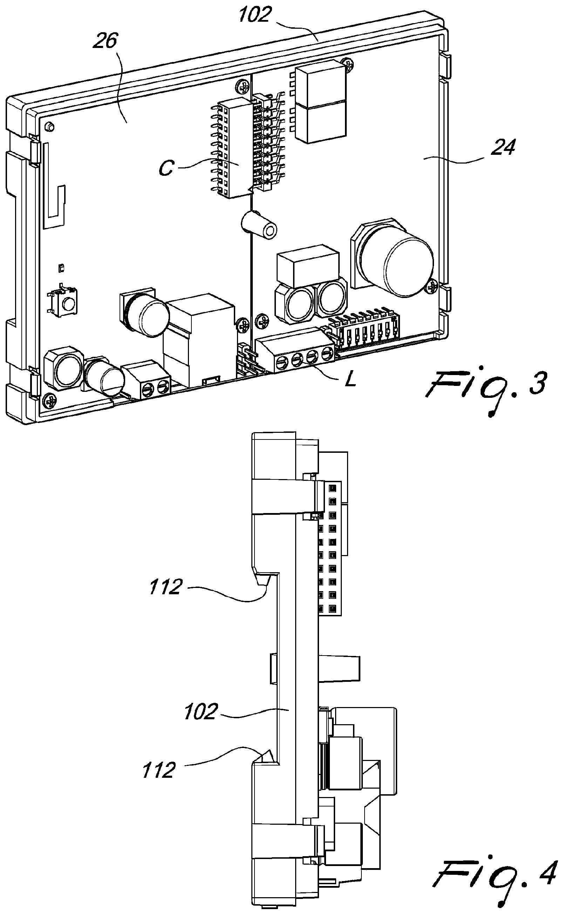

With particular reference now to Figure 3, the device 10 according to the invention comprises a first circuit board 24 which is interchangeable on the basis of the type/model of pre-existing video door phone system, and is provided with line terminals L for connection to the BUS 22 and with first circuit means adapted to process the signals originating from the line terminals L and transmit them in a predetermined format, through a connector C, to a second, fixed circuit board 26; the latter is provided with second circuit means adapted to process the signals originating from the first circuit board 24 and forward them in digital format over a data communications network (typically, the internet) by way of integrated digital connection means, and vice versa.

In other words, the components of the circuit that transmits the information, after processing, from the BUS 22 to the internet, and vice versa, are physically divided into two separate circuit boards that communicate through the connector C, one of which is configured to interface with the video door phone system 12 and the other with the internet.

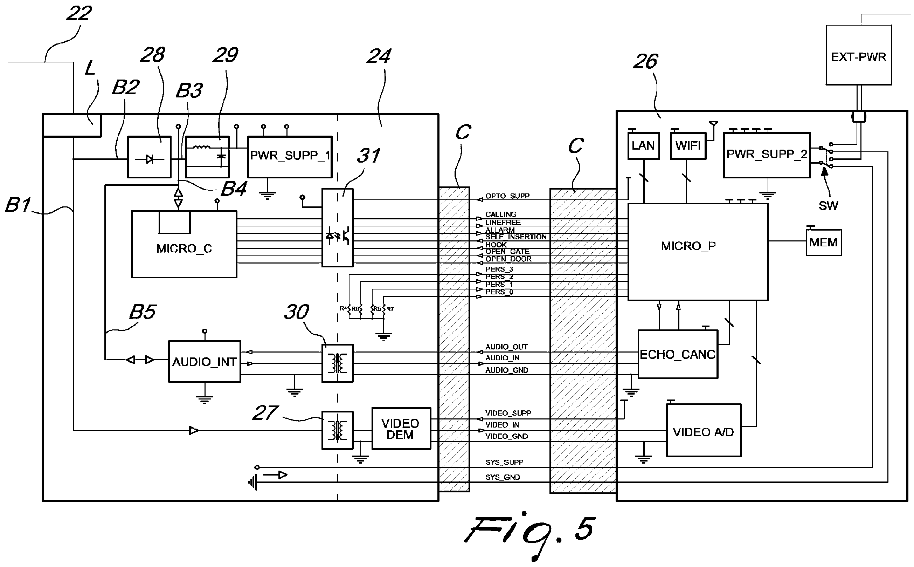

With particular reference now to Figure 5, two branches B1 and B2 branch off from the line terminals L of the first circuit board 24. The signal on the first branch B1 is filtered by a video signal transformer 27, demodulated by a video demodulator VIDEO DEM, and then transmitted to the second circuit board 26 through the connector C as an incoming analog video signal VIDEO IN. Two further contacts of the connector C are dedicated to the power supply VIDEO_SUPP and to the grounding VIDEO_GND of the video demodulator VIDEO DEM.

The signal on the second branch B2 is rectified by a rectifier 28, after which point the second branch B2 forks off into a third branch B3 and a fourth branch B4. The third branch B3 is connected to a first power supply block PWR_SUPP_1 by way of an electronic coil 29.

A fifth branch B5 forks off from the fourth branch B4 and is connected to an analog audio interface AUDIO_INT, which converts the "mixed" audio signal to an incoming audio signal and an outgoing audio signal, and vice versa. The incoming audio signal AUDIO_IN and the outgoing audio signal AUDIO OUT are transmitted to the second circuit board 26 through the connector C, after being filtered by way of an audio signal transformer 30. An additional contact, AUDIO_GND, is for grounding.

A sixth branch B6 forks off from the fourth branch B4 and is connected to a microcontroller MICRO_C, which is programmed to exchange digital signals with the second circuit board 26 through the connector C (in the example described herein, seven signals dedicated to respective functions which will be described below), after being filtered by way of a signal opto-isolator 31.

In the example described herein, the microcontroller MICRO_C processes the following three digital signals toward the second circuit board 26:
CALLING: incoming call,
LINE_FREE: no active calls in the system, and
ALARM: alarm status;
as well as the following three digital signals originating from the second circuit board 26:
   SELF_INSERTION: capture video without audio connection,
   HOOK: open conversation remotely,
   OPEN_DOOR: open door, and
   OPEN_GATE: open gate.

An additional contact, OPTO_SUPP, is for supplying power to the signal opto-isolator 31.

The connector C further comprises four contacts for respective setting signals PERS_0, PERS_1, PERS_2 and PERS_3, which lead to respective resistors R7, R5, R6 and R4 on the first circuit board 24.

Two final contacts SYS_SUPP and SYS_GND provide the power supply to the second circuit board 26, which therefore does not need an independent power supply.

The second circuit board 26 is provided with a micro-processor MICRO_P which is functionally connected to a block of flash memory MEM. The micro-processor MICRO_P can communicate with the internet by way of the LAN (Local Area Network). To this end, the micro-processor MICRO_P is connected to a Wi-Fi module and to a LAN port to which an Ethernet cable can be connected, both of which are integrated in the second circuit board 26. The Wi-Fi module and the LAN port, in the example described herein, constitute the above-mentioned digital connection means and are adapted to interface with a conventional modem/router MR present in the dwelling (Figure 1).

The micro-processor MICRO P is programmed to exchange the digital signals listed previously with the microcontroller MICRO_C through the connector C.

The second circuit board 26 comprises an analog-to-digital video converter VIDEO_A/D, which receives the analog video signal from the video demodulator VIDEO DEM on the first circuit board 24, converts it to digital format and transmits it to the micro-processor MICRO_P.

In the embodiment described herein, the micro-processor MICRO P incorporates A/D-D/A conversion means (not shown) for the incoming audio signals AUDIO_IN and the outgoing audio signals AUDIO_OUT respectively; these last items are furthermore processed by an echo cancellation device ECHO CANC which is functionally interposed between the connector C and the micro-processor MICRO_P.

The second circuit board 26 is usually powered by the first circuit board 24 as mentioned above. However, to cater for cases where the first circuit board is not designed to provide a power supply, it is provided with a respective second power supply block PWR_SUPP_2, which can be activated by way of a switch SW and can be connected to an external power supply EXT_PWR which is connected to the mains electricity supply.

As illustrated in Figures 2-4, the first circuit board 24 and the second circuit board 26 are accommodated in a box-like support 100 made of plastic material.

The box-like support 100 is made up of a base 102 onto which the circuit boards are screwed, and a cover 104 provided with aeration grilles 106, which is mounted by snap-fitting onto the base 102.

The device 10 can be mounted in the electrical switchboard of the dwelling, or fixed to a wall by way of a frame 108 provided with holes 110 for fixing by way of screws (not shown) to a generic component-holding box (not shown).

The base 102 is provided on the rear side with engagement means 112 for fixing to the frame 108 (Figure 4).

The device thus fitted can be covered by a mask 114 with an aesthetic and protective function, which is mounted by snap-fitting onto the frame 108.

In operation, the first circuit board 24 is designed to interface with the pre-existing video door phone system so as to simulate the behavior of a receiving station of that system. To this end, the first circuit board 24 uses the same formats and protocols already used on the BUS 22 for sending/receiving the analog and digital signals (video/audio and data) relating to the operation of the video door phone apparatus.

In the first circuit board 24, the incoming signals are therefore converted to a format that can be read by the second circuit board 26 and sent to the latter through the connector C. The second circuit board 26 converts the analog signals (audio and video) to digital and transmits them over the internet via Wi-Fi or Ethernet cable, together with the digital signals originating from the first circuit board 24.

Obviously, the audio signals and the data originating from the internet travel along the reverse path.

In practical use, the user, provided with a portable terminal with internet access, such as a smartphone, a tablet computer or the like, has to install a specific application and be provided with an SIP (Session Initiation Protocol) User Account for managing the communication session.

In this manner, the audio/video call from the calling station 14 can be managed similarly to any VOIP video call with the associated features (display of the image before answering; answer, forward or refuse the call; deactivation of one's own audio channel; etc.), plus the additional functions of opening the door and opening the gate, which are typical of video door phone systems.

Obviously, other functions can be implemented, for example, the possibility of using a smartphone/tablet computer to access home automation functions of the dwelling, the possibility of communicating from the monitor to a portable terminal and, optionally, vice-versa, etc.

The effective/potential features of the system will not be described here in detail as they lie outside the scope of the present invention.

Programming the system to execute the functions described above also comes under the normal knowledge of the person skilled in the art and therefore it will not be discussed further here.

As the person skilled in the art will be able to appreciate, the call forwarding device described above offers high versatility in that it can be adapted to any pre-existing door phone by replacing only the first circuit board 24 with a specially-designed one, while the second circuit board 26 does not change.

Obviously, especially for fully analog video door phone systems, it will be possible to provide a "system side" circuit board that is capable of adapting to different models with simple adjustments carried out, e.g., by way of trimmers, jumpers and the like.

Another advantage of the invention is that the device can still be used even if the video door phone system is replaced, for example at apartment-building level, simply by replacing the first circuit board 24 with one capable of interfacing with the new system.

By virtue of the interfacing of the two circuit boards through the connector C, the operations to install/replace the first circuit board 24 can be carried out rapidly and without intervening on the soldering.

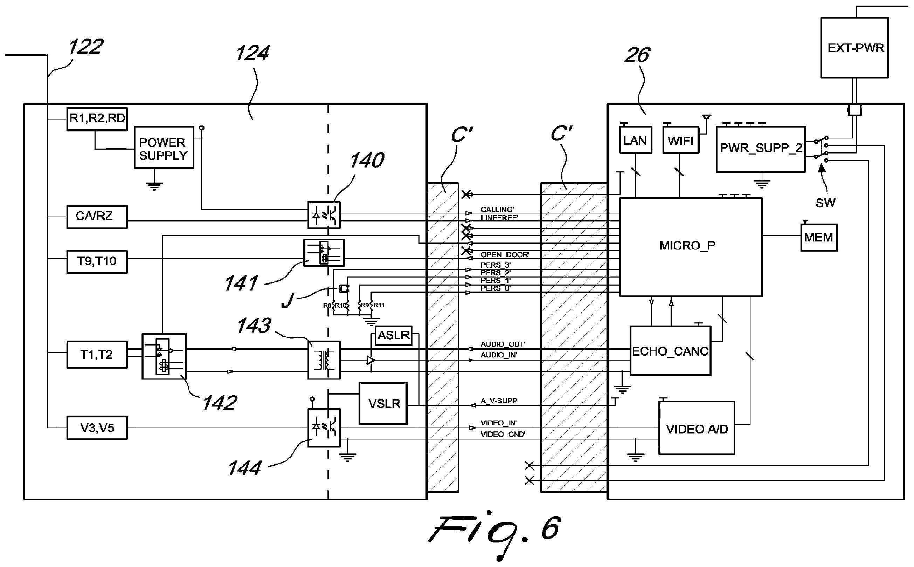

Figure 6 shows an alternative embodiment of the invention, in which the first circuit board 124 is designed to interface with a fully analog video door phone system.

Differently from the previous embodiment, in fact, it is immediately clear that there is no microcontroller in the first circuit board 124.

In this embodiment, the video door phone signal travels on a multiwire communication line 122 which is connected to five groups of terminals on the first circuit board 124.

A first group of three terminals R1, R2 and RD is connected to a power supply block of the video system PWR_SUPP_1' and transmits, to the second circuit board 26, the LINE_FREE' signal which indicates that the system is in the inactive condition (no conversation session is established), through a first signal opto-isolator 140.

A second group containing a CA/RZ terminal transmits, to the second circuit board 26, the CALLING' signal which indicates the arrival of a call, again through the first signal opto-isolator 140.

A third group of two terminals T9, T10 receives, from the second circuit board 26, the OPEN DOOR' signal which commands the opening of the door by way of a first relay 141.

A fourth group of two terminals T1, T2 exchanges incoming audio signals AUDIO_IN' and outgoing audio signals AUDIO_OUT' with the second circuit board 26, by way of a second relay 142 and an audio signal transformer 143.

A fifth group of two terminals V3, V5 transmits the incoming video signal VIDEO_IN' to the second circuit board 26, by way of a second signal opto-isolator 144.

The first circuit board 124 further comprises a stabilized power supply block ASLR for the audio system and a stabilized power supply block VSLR for the video system, both powered by the second circuit board 26 through the connector C' by way of the A-V_SUPP signal. In this case, the second circuit board 26 needs to be powered by the external power supply EXT_PWR through the second power supply block PWR_SUPP_2, by activating the switch SW.

Similarly to the previous embodiment, the connector C' further comprises four contacts for setting functions, PERS_0', PERS_1', PERS_2' and PERS 3', which lead to respective resistors R11, R9, R10 and R8. The PERS_2' contact connected to the resistor R10 has a removably connected jumper J for selecting the audio or audio/video signal.

It should be noted that in this embodiment, in which the pre-existing video door phone system is fully analog, the second circuit board 26 does not change with respect to the previous embodiment. This demonstrates that the invention fully achieves the set aim of providing a device that is highly flexible in relation to the possibility of adapting to pre-existing systems of any type and age, simply by replacing the "system side" circuit board with another, while the "internet side" circuit board remains unchanged and can self-adapt automatically to the pre-existing system on the basis of the values detected on the contacts for setting signals PERS_0', PERS _1', PERS_2', PERS_3'.

Some preferred embodiments of the invention have been described, but obviously the person skilled in the art may make various modifications and variations within the scope of the appended claims.

In particular, as previously mentioned, although in the embodiments described herein reference has always been made to video door phone systems, the present invention could equally be applied also to door phone systems without a video connection.

Furthermore, in both of the embodiments described herein, the first circuit board interfaces with a system in which at least some of the signals are transmitted in analog format. However, the first circuit board could also be programmed to manage only digital signals, should the pre-existing system also transmit the audio/video signals in digital format. In such case, all of the digital signal could be advantageously transmitted through the connector C, using a BUS using a dedicated protocol instead of a plurality of signals.

Also, the components of the second, fixed circuit board can be modified and/or supplemented on the basis of design choices that come under the normal knowledge of the person skilled in the art. For example, although in the embodiment described herein the micro-processor of the second card comprises an A/D-D/A converter only for the audio signal and not for the video signal, a micro-processor can be chosen that comprises conversion means for both signals, or both signals could be converted by conversion means external to the micro-processor.

Where the technical features mentioned in any claim are followed by reference numerals and/or signs, those reference numerals and/or signs have been included for the sole purpose of increasing the intelligibility of the claims and accordingly, such reference numerals and/or signs do not have any limiting effect on the interpretation of each element identified by way of example by such reference numerals and/or signs.

## Claims

1. A call forwarding device for door phone and video door phone systems (12) that are provided with a communication line (22, 122) over which signals are exchanged between a calling station (14) arranged outside a building, and at least one receiving station (18) inside of a dwelling (D) of the building, said device being connectable to said communication line (22, 122) inside the dwelling (D) and comprising circuit means adapted to forward said signals on a data communications network, **characterized in that** said device (10) is a stand alone device which is operatively autonomous with respect to said receiving station (18), said circuit means comprising two separate circuit boards (24, 124, 26) which communicate with each other according to a predetermined format through a connector (C, C'), an interchangeable one (24, 124) of said circuit boards being configured to interface directly with said communication line (22, 122) operatively in addition to, or as an alternative of, said receiving station (18), via respective terminals (L), the other, fixed one (26) of said circuit boards being configured to interface with the data communications network, wherein the connector (C, C') comprises contacts for setting functions (PERS_0, PERS_1, PERS_2 and PERS_3; PERS_0', PERS_1', PERS_2' and PERS_3') which are connected to respective resistors (R7, R5, R6, R4, R11, R9, R10, R8) and wherein the fixed one (26) of said circuit boards is adapted to self-adapt automatically to the system (12) on the basis of the values detected on the contacts for setting signals.

2. The device according to claim 1, **characterized in that** said fixed circuit board (26) is provided with a microprocessor (MICRO_P) which communicates with said data communications network via digital connection means (WIFI, LAN) which are incorporated within said fixed circuit board (26).

3. The device according to claim 2, **characterized in that** said digital connection means comprise at least one Wi-Fi module.

4. The device according to claim 2 or 3, **characterized in that** said digital connection means comprise at least one LAN port.

5. The device according to one or more of claims 1-4, **characterized in that** said fixed circuit board (26) comprises an analog-to-digital video converter (VIDEO A/D) for incoming video signals.

6. The device according to one or more of claims 1-5, **characterized in that** said microprocessor (MICRO_P) incorporates an A/D-D/A converter for incoming and outgoing audio signals.

7. The device according to one or more of claims 1-6, **characterized in that** said fixed circuit board (26) comprises an echo cancellation device (ECHO_CANC) for incoming/outgoing audio signals.

8. The device according to one or more of claims 1-7, **characterized in that** said fixed circuit board (26) is configured to draw power from said interchangeable circuit board (24, 124) via said connector (C, C').

9. The device according to one or more of claims 1-8, **characterized in that** said fixed circuit board (26) can be connected to an external power supply (EXT-PWR) by way of a respective power supply block (PWR_SUPP_2).

10. The device according to one or more of claims 1-9, **characterized in that** said interchangeable circuit board (24, 124) incorporates a microcontroller (MICRO_C) which is programmed to exchange digital signals with said second, fixed circuit board (26) via said connector (C, C').

11. The device according to one or more of claims 1-10, **characterized in that** said interchangeable circuit board (24) incorporates a video demodulator (VIDEO_DEM) for incoming analog video signals (VIDEO_IN).

12. The device according to one or more of claims 1-11, **characterized in that** said interchangeable circuit board (24) incorporates an audio interface (AUDIO_INT) for converting the mixed audio signal on said communication line (22) to an incoming audio signal and an outgoing audio signal, and vice versa.

13. The device according to one or more of claims 1-12, wherein said communication line (22, 122) is multiwire, **characterized in that** said interchangeable circuit board (24, 124) comprises five groups of terminals which are dedicated respectively to supplying power to the video system (VIDEO_SUPP, A_V_SUPP) transmission of the call signal (CALLING, CALLING'), door-opening command (OPEN_DOOR, OPEN_DOOR') transmission of the incoming audio signals (AUDIO_IN, AUDIO_IN') and of the outgoing audio signals (AUDIO_OUT, AUDIO_OUT') and transmission of the incoming video signal (VIDEO_IN , VIDEO_IN').

14. The device according to one or more of claims 1-13, **characterized in that** said first circuit board (24, 124) and said second circuit board (26) are accommodated in a box-like support (100) made of plastic material, which can be screwed to a component-holding box by way of a frame (108).

## Patentansprüche

1. Eine Anrufweiterleitungsvorrichtung für Türsprechanlagen und Videotürsprechanlagen (12), die mit einer Kommunikationsleitung (22, 122) ausgestattet sind, über welche Signale zwischen einer rufenden Station (14) außerhalb eines Gebäudes und mindestens einer empfangenden Station (18) innerhalb eines Raumes (D) des Gebäudes ausgetauscht werden, wobei die Vorrichtung mit der Kommunikationsleitung (22, 122) innerhalb des Raumes (D) verbindbar ist und Schaltkreismittel umfasst, die ausgebildet sind, um die Signale in einem Datenübermittlungsnetz weiterzuleiten; **dadurch gekennzeichnet, dass** die Vorrichtung (10) eine eigenständige Vorrichtung ist, die mit Bezug auf die empfangende Station (18) operativ autonom ist; wobei die Schaltkreismittel zwei separate Leiterplatten (24, 124, 26) umfassen, die miteinander über ein Verknüpfungsglied (C, C') in einem vordefinierten Format kommunizieren; wobei eine austauschbare (24, 124) der Leiterplatten konfiguriert ist, um sich operativ über entsprechende Klemmen (L) direkt mit der Kommunikationsleitung (22, 122) zu verbinden, zusätzlich oder alternativ zu der empfangenden Station (18); wobei die andere, feste (26) der Leiterplatten konfiguriert ist, um sich mit dem Datenübermittlungsnetz zu verbinden; wobei das Verknüpfungsglied (C, C') Kontakte zum Setzen von Funktionen (PERS_0, PERS_1, PERS_2 und PERS_3; PERS_0', PERS_1', PERS_2' und PERS_3') umfasst, die mit entsprechenden Widerständen (R7, R5, R6, R4, R11, R9, R10, R8) verbunden sind und wobei die feste (26) der Leiterplatten ausgebildet ist, um sich auf der Grundlage der Werte, die an den Kontakten zum Setzen von Signalen erfasst wurden, automatisch selbst anzupassen.

2. Die Vorrichtung gemäß Anspruch 1, **dadurch gekennzeichnet, dass** die feste Leiterplatte (26) mit einem Mikroprozessor (MICRO_P) ausgestattet ist, der mit dem Datenübermittlungsnetz über digitale Verbindungsmittel (WIFI, LAN) kommuniziert, welche in die feste Leiterplatte (26) integriert sind.

3. Die Vorrichtung gemäß Anspruch 2, **dadurch gekennzeichnet, dass** die digitalen Verbindungsmittel mindestens ein Wi-Fi-Modul umfassen.

4. Die Vorrichtung gemäß Anspruch 2 oder 3, **dadurch gekennzeichnet, dass** die digitalen Verbindungsmittel mindestens eine LAN-Anschlussbuchse umfassen.

5. Die Vorrichtung gemäß einem oder mehreren der Ansprüche 1-4, **dadurch gekennzeichnet, dass** die feste Leiterplatte (26) einen Analog-Digital-Video-Wandler (VIDEO A/D) für eingehende Videosignale umfasst.

6. Die Vorrichtung gemäß einem oder mehreren der Ansprüche 1-5, **dadurch gekennzeichnet, dass** der Mikroprozessor (MICRO_P) einen A/D-D/A-Wandler für eingehende und ausgehende Audiosignale enthält.

7. Die Vorrichtung gemäß einem oder mehreren der Ansprüche 1-6, **dadurch gekennzeichnet, dass** die feste Leiterplatte (26) eine Echokorrekturvorrichtung (ECHO_CANC) für eingehende/ausgehende Audiosignale umfasst.

8. Die Vorrichtung gemäß einem oder mehreren der Ansprüche 1-7, **dadurch gekennzeichnet, dass** die feste Leiterplatte (26) konfiguriert ist, um über das Verbindungsglied (C, C') Strom aus der austauschbaren Leiterplatte (24, 124) zu ziehen.

9. Die Vorrichtung gemäß einem oder mehreren der Ansprüche 1-8, **dadurch gekennzeichnet, dass** die feste Leiterplatte (26) über einen entsprechenden Stromversorgungsblock (PWR_SUPP_2) an eine externe Stromversorgung (EXT-PWR) angeschlossen werden kann.

10. Die Vorrichtung gemäß einem oder mehreren der Ansprüche 1-9, **dadurch gekennzeichnet, dass** die austauschbare Leiterplatte (24, 124) einen Mikrocontroller (MICRO_C) enthält, welcher programmiert ist, um über das Verbindungsglied (C, C') Digitalsignale mit der zweiten, festen Leiterplatte (26) auszutauschen.

11. Die Vorrichtung gemäß einem oder mehreren der Ansprüche 1-10, **dadurch gekennzeichnet, dass** die austauschbare Leiterplatte (24) einen Videodemodulator (VIDEO_DEM) für eingehende analoge Videosignale (VIDEO_IN) enthält.

12. Die Vorrichtung gemäß einem oder mehreren der Ansprüche 1-11, **dadurch gekennzeichnet, dass** die austauschbare Leiterplatte (24) eine Audioschnittstelle (AUDIO_INT) zur Umwandlung des gemischten Audiosignals an der Kommunikationsleitung (22) in ein eingehendes Audiosignal und ein ausgehendes Audiosignal und umgekehrt enthält.

13. Die Vorrichtung gemäß einem oder mehreren der Ansprüche 1-12, wobei die Kommunikationsleitung (22, 122) mehradrig ist; **dadurch gekennzeichnet, dass** die austauschbare Leiterplatte (24, 124) fünf Gruppen von Klemmen umfasst, die folgenden Aufgaben zugeordnet sind: Stromzufuhr an das Videosystem (VIDEO_SUPP, A_V_SUPP), Übertragung des Anrufsignals (CALLING, CALLING'), Türöffnungsbefehl (OPEN_DOOR, OPEN_DOOR'), Übertragung der eingehenden Audiosignale (AUDIO_IN, AUDIO_IN') und der ausgehenden Audiosignale (AUDIO_OUT, AUDIO_OUT') und Übertragung des eingehenden Videosignals (VIDEO_IN, VIDEO_IN').

14. Die Vorrichtung gemäß einem oder mehreren der Ansprüche 1-13, **dadurch gekennzeichnet, dass** die erste Leiterplatte (24, 124) und die zweite Leiterplatte (26) in einem kastenähnlichen Träger (100) aus Kunststoffmaterial untergebracht sind, der mit Hilfe eines Rahmens (108) mit einem Komponenten enthaltenden Kasten verschraubt werden kann.

## Revendications

1. Dispositif de transfert d'appel pour des systèmes de téléphonie de porte et de visiophonie de porte (12) qui sont pourvus d'une ligne de communication (22, 122) sur laquelle des signaux sont échangés entre une station appelante (14) agencée à l'extérieur d'un bâtiment, et au moins une station réceptrice (18) à l'intérieur d'un logement (D) du bâtiment, ledit dispositif pouvant être raccordé à ladite ligne de communication (22, 122) à l'intérieur du logement (D) et comprenant des moyens de circuits adaptés pour transférer lesdits signaux sur un réseau de communication de données, **caractérisé en ce que** ledit dispositif (10) est un dispositif autonome qui est opérationnellement autonome par rapport à ladite station réceptrice (18), lesdits moyens de circuits comprenant deux cartes à circuits séparées (24, 124, 26) qui communiquent l'une avec l'autre selon un format prédéterminé via un connecteur (C, C'), une carte interchangeable (24, 124) parmi lesdites cartes à circuits étant configurée pour s'interfacer directement avec ladite ligne de communication (22, 122) de manière opérationnelle en plus de ladite station réceptrice (18), ou en variante de celle-ci, via des bornes (L) respectives, l'autre carte, fixe (26) parmi lesdites cartes à circuits étant configurée pour s'interfacer avec le réseau de communication de données, dans lequel le connecteur (C, C') comprend des contacts pour des fonctions de paramétrage (PERS_0, PERS_1, PERS_2 et PERS_3 ; PERS_0', PERS_1', PERS_2' et PERS_3') qui sont connectés à des résistances (R7, R5, R6, R4, R11, R9, R10, R8) respectives, et dans laquelle la carte fixe (26) parmi lesdites cartes à circuits est adaptée pour s'auto-adapter automatiquement au système (12) sur la base des valeurs détectées sur les contacts pour des signaux de paramétrage.

2. Dispositif selon la revendication 1, **caractérisé en ce que** ladite carte à circuit fixe (26) est pourvue d'un microprocesseur (MICRO_P) qui communique avec ledit réseau de communication de données via des moyens de connexion numériques (WIFI, LAN) qui sont incorporés à l'intérieur de ladite carte à circuit fixe (26).

3. Dispositif selon la revendication 2, **caractérisé en ce que** lesdits moyens de connexion numériques comprennent au moins un module Wi-Fi.

4. Dispositif selon la revendication 2 ou 3, **caractérisé en ce que** lesdits moyens de connexion numériques comprennent au moins un port LAN.

5. Dispositif selon une ou plusieurs des revendications 1 à 4, **caractérisé en ce que** ladite carte à circuit fixe (26) comprend un convertisseur vidéo analogique-numérique (VIDEO A/D) pour des signaux vidéo entrants.

6. Dispositif selon une ou plusieurs des revendications 1 à 5, **caractérisé en ce que** ledit microprocesseur (MICRO_P) incorpore un convertisseur A/D-D/A pour des signaux audio entrants et sortants.

7. Dispositif selon une ou plusieurs des revendications 1 à 6, **caractérisé en ce que** ladite carte à circuit fixe (26) comprend un dispositif d'annulation d'écho (ECHO_CANC) pour des signaux audio entrants/sortants.

8. Dispositif selon une ou plusieurs des revendications 1 à 7, **caractérisé en ce que** ladite carte à circuit fixe (26) est configurée pour prélever du courant à partir de la carte à circuit interchangeable (24, 124) via ledit connecteur (C, C').

9. Dispositif selon une ou plusieurs des revendications 1 à 8, **caractérisé en ce que** ladite carte à circuit fixe (26) peut être raccordée à une alimentation externe (EXT-PWR) au moyen d'un bloc d'alimentation respectif (PWR_SUPP_2).

10. Dispositif selon une ou plusieurs des revendications 1 à 9, **caractérisé en ce que** ladite carte à circuit interchangeable (24, 124) incorpore un microcontrôleur (MICRO_C) qui est programmé pour échanger des signaux numériques avec ladite seconde carte à circuit fixe (26) via ledit connecteur (C, C').

11. Dispositif selon une ou plusieurs des revendications 1 à 10, **caractérisé en ce que** ladite carte à circuit interchangeable (24) incorpore un démodulateur vidéo (VIDEO_DEM) pour des signaux vidéo analogiques entrants (VIDEO_IN).

12. Dispositif selon une ou plusieurs des revendications 1 à 11, **caractérisé en ce que** ladite carte à circuit interchangeable (24) incorpore une interface audio (AUDIO_INT) pour convertir le signal audio mixte sur ladite ligne de communication (22) en un signal audio entrant et un signal audio sortant, et vice versa.

13. Dispositif selon une ou plusieurs des revendications 1 à 12, dans lequel ladite ligne de communication (22, 122) est multifilaire, **caractérisé en ce que** ladite carte à circuit interchangeable (24, 124) comprend cinq groupes de bornes qui sont respectivement dédiés à l'alimentation du système vidéo (VIDEO_SUPP, A V SUPP), la transmission du signal d'appel (CALLING, CALLING'), la commande d'ouverture de porte (OPEN_DOOR, OPEN_DOOR'), la transmission des signaux audio entrants (AUDIO_IN, AUDIO_IN') et des signaux audio sortants (AUDIO_OUT, AUDIO_OUT'), et la transmission du signal vidéo entrant (VIDEO_IN, VIDEO_IN').

14. Dispositif selon une ou plusieurs des revendications 1 à 13, **caractérisé en ce que** ladite première carte à circuit (24, 124) et ladite seconde carte à circuit (26) sont reçues dans un support analogue à un boîtier (100) en matière plastique, qui peut être vissé à un boîtier contenant des composants au moyen d'un châssis (108).
